# EUROPÄISCHE PATENTSCHRIFT

(11) **EP 0 503 732 B1**
(45) Veröffentlichungstag und Bekanntmachung des Hinweises auf die Patenterteilung: **28.01.1998**
(21) Anmeldenummer: 92200655.6
(22) Anmeldetag: 06.03.1992
(51) Int. Cl.: H04J 3/07

(54) **Übertragungsverfahren und -system für die digitale Synchron-Hierarchie**
Transmission method and system for synchronous digital hierarchy
Méthode et système de transmission pour la hiérarchie numérique synchrone

(30) Priorität: 15.03.1991 DE 4108429
(43) Veröffentlichungstag der Anmeldung: 16.09.1992
(73) Patentinhaber: LUCENT TECHNOLOGIES INC., Murray Hill, New Jersey 07974-0636 (US)
(72) Erfinder: Urbansky, Ralph, Dr.-Ing., W-8501 Schwaig 2 (DE)
(74) Vertreter: Tergau, Dietrich, Dipl.-Ing.

(56) Entgegenhaltungen:
- EP-A- 0 412 575
- DE-A- 3 315 372
- DE-A- 4 018 687
- GB-A- 1 195 899
- DATABASE WPI Week 7520, Derwent Publications Ltd., London, GB; AN 75-F2727W & NL-A-7 414 194

## Beschreibung

Die Erfindung bezieht sich auf ein Übertragungsverfahren für die synchrone digitale Hierarchie gemäß dem Oberbegriff des Anspruchs 1. Sie bezieht sich weiter auf ein entsprechendes System zur Durchführung des Verfahrens. Ein derartiges Verfahren und System sind aus der DE 40 18 687 A1 bekannt.

Bei einem solchen Übertragungssystem für die digitale synchrone Hierarchie werden plesiochrone Signale durch eine Multiplexbildung zusammengefaßt und über eine optische Übertragungsstrecke übertragen. Zwei digitale Signale heißt plesiochron, wenn ihre Bitraten innerhalb einer gegebenen Toleranz vom Nennwert abweichen. Die Signale werden dabei nach einem bestimmten Muster zusammengefaßt und nach Rahmen strukturiert. Ein solcher Rahmen wird bei der digitalen synchronen Hierarchie als synchroner Transpostmodul STM-N bezeichnet und ist insbesondere in den CCITT-Empfehlungen "Recommendation G 707, G 708 und G 709" beschrieben.

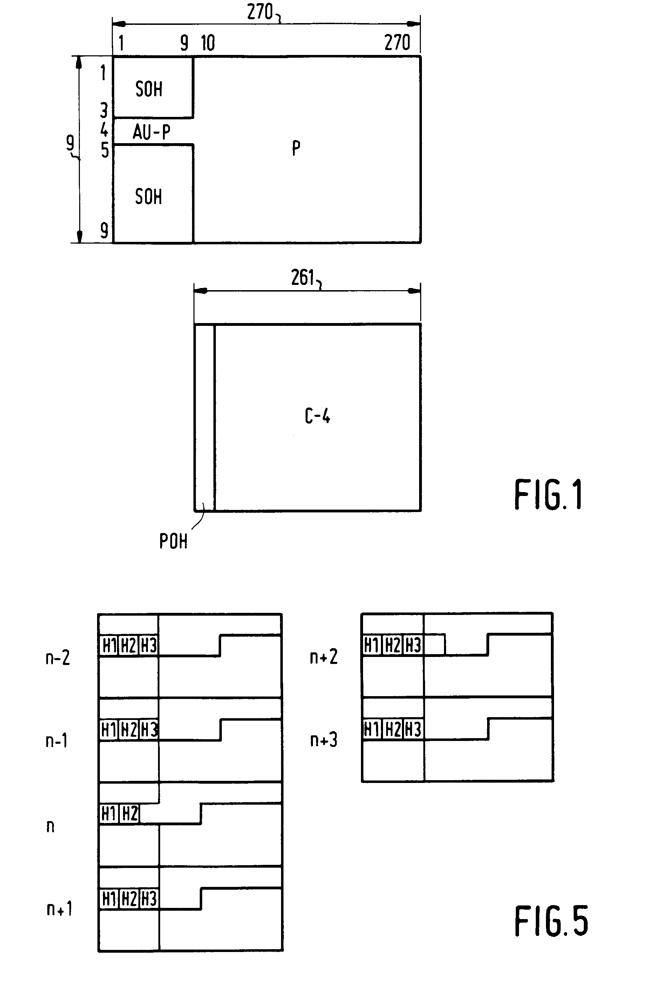

Die Struktur eines STM-1-Rahmens ist in Fig. la schematisch dargestellt. Der Rahmen besteht aus 270 Spalten und 9 Zeilen (pro Zeile 270 Bytes). In den Zeilen 1 bis 3 und 5 bis 9, jeweils in den Spalten 1 bis 9 ist der sogenannte "Section Overhead" (SOH) für Steuerungs- und Fehlererkennungsinformationen, in der vierten Zeile von Spalte 1 bis 9 ist eine Verwaltungseinheit, die als "AU-Pointer" (AU-P) bezeichnet ist, und in den restlichen Spalten und Zeilen die eigentliche Nutzinformation, die "STM-1-Payload" (P) untergebracht. Wie Fig. 1b zeigt, ist in der STM-1-Payload beispielsweise ein virtueller Container VC-4 untergebracht, der aus einem Nutzinformationsbereich und einem Steuerungsbereich POH (Path Overhead) besteht. Unter einem Container wird hierbei die Grundverpackungseinheit für Nutzsignale verstanden. In einem solchen Container können noch weitere Container untergebracht werden.

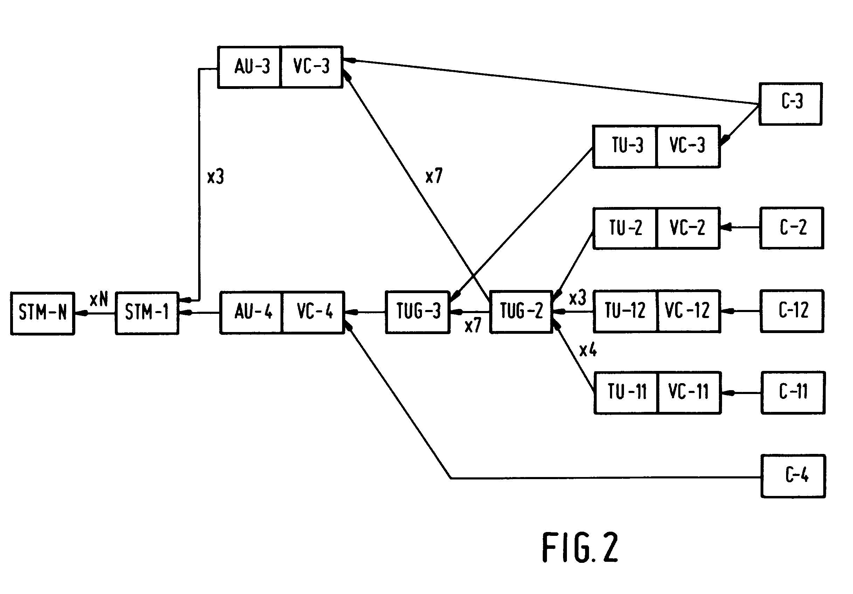

Ein Multiplexbildung nach dem gegenwärtigen Diskussionsstand für den STM-N-Rahmen ist in Fig. 2 gezeigt. Beispielsweise werden in einen Container C-4 Daten eines Nutzsignals mit einer Bitrate von 140 MBit/s hineingebracht. Durch Hinzufügung des POH wird aus dem Container C-4 ein virtueller Container VC-4. Durch Hinzufügung von Stopfbytes und weiteren Bytes wird aus dem virtuellen Container VC-4 eine "Administrative Unit" AU-4. Der Container VC-4 kann auch durch Zusammenfügung von mehreren Containern C-12 gebildet werden. In einem solchen Container C-12 werden Daten eines Nutzsignals mit einer Bitrate von 2 MBit/s hineingelegt. Daraus wird durch Hinzufügung eines POH ein virtueller Container VC-12. Aus dem virtuellen Container VC-12 wird durch eine Hinzufügung von Stopfbytes und weiteren Bytes eine "Tributary unit" TU-12. Diese TU's werden zu Gruppen TUG-2 bzw. TUG-3 zusammengefaßt.

Bei der Übertragung eines synchronen Transportmoduls STM-N können Taktanpassungsprobleme z.B. bei der Zusammenfassung mehrerer STM-1-Signale zu einem STM-4-Signal auftreten, wie z.B. in dem Aufsatz "Jitter bei der Übertragung plesiochroner Signale in der SDH" von M. Robledo und R. Urbansky, PKI Techn. Mitt. 3/1989, Seiten 31 bis 38, beschrieben ist. Aufgrund von Phasenschwankungen (Wander) oder kleinen Frequenzabweichungen sind die unterschiedlichen Takte der verschiedenen STM-1-Signale nicht mehr zueinander angepaßt. Eine Taktanpassung wird durch ein Bytestopfverfahren durchgeführt. Hierbei werden an fest vorgegebenen Stellen entweder positive oder negative Stopfstellen durch Stopfbytes besetzt. Bei einem positiven Stopfvorgang wird an der Stopfstelle die Nutzinformation ausgelassen. Diese Stopfstelle enthält nämlich sonst eine Nutzinformation. Bei einem negativen Stopfvorgang wird in der Stopfstelle Nutzinformation übertragen. Sonst trägt diese Stopfstelle keine Nutzinformation.

Der Erfindung liegt die Aufgabe zugrunde, ein Übertragungsverfahren und ein Übertragungssystem für die synchrone digitale Hierarchie mit einer Schaltung zur Steuerung der Stopfvorgänge zu schaffen.

Die Aufgabe wird bei einem Übertragungsverfahren der eingangs genannten Art erfindungsgemäß gelöst durch die kennzeichnenden Merkmale des Anspruchs 1. Bezüglich des Übertragungssystems wird die Aufgabe erfindungsgemäß gelöst durch die Merkmale des Anspruchs 10.

Das Übertragungssystem enthält eine Anpassungsschaltung, mit der Stopfvorgänge gesteuert werden. Dabei weist die Anpassungsschaltung wenigstens einen Pufferspeicher auf, in den Daten eines Containers eingeschrieben und aus dem Daten ausgelesen werden. Bei der Einschreibung der Daten werden unter Schreibadressen, die von einem Schreibadressengenerator geliefert werden, Daten in den Pufferspeicher eingeschrieben. Ein Leseadressengenerator liefert dem Pufferspeicher noch Leseadressen. Die Daten, welche unter der Leseadresse abgelegt sind, werden dann aus dem Pufferspeicher ausgelesen. Ob ein Stopfvorgang vorgenommen wird, hängt vom Vergleich der Lese- und Schreibadressen in einer Stopfentscheidungsschaltung ab. Hierbei wird die Differenz zwischen einer Schreib- und einer Leseadresse gebildet. Der sich daraus ergebende Differenzwert dient zur Mittelwertbildung über eine bestimmte Dauer der Differenzwertbildung. Diese Mittelwertbildung kann beispielsweise eine Zeilen- oder Rahmendauer oder ein Vielfaches davon betragen. Bei einer solchen arithmethischen Mittelwertbildung wird jeder Differenzwert gleich gewichtet. Ein Stopfsignal, welches zur Angabe einer negativen oder positiven Stopfstelle vorgesehen ist, wird gebildet, wenn bestimmte Werte unterschritten oder überschritten sind. In einer Ausgangsschaltung wird aus den im Pufferspeicher gespeicherten Daten ein Ausgangssignal gebildet, welches negative oder positive Stopfstellen enthalten kann. Soll positiv gestopft werden, so werden Daten für einen Takt nicht ausgelesen, und soll negativ gestopft werden, so werden Daten an eine sonst nicht mit Nutzinformation besetzte Stopfstelle hineingegeben.

Für den Stopfvorgang eines VC-4-Containers wird jeweils nur ein Pufferspeicher, ein Schreib- und Leseadressengenerator und eine Stopfentscheidungsschaltung benötigt. Sollen beispielsweise mit VC-12-Containern Stopfvorgänge durchgeführt werden, so enthält die Anpassungsschaltung 63 Pufferspeicher, 63 Schreib- und Leseadressengeneratoren und 63 Stopfentscheidungsschaltungen. Wenn in einem VC-4-Container nur VC-12-Container enthalten sind, beträgt deren Anzahl 63. Die Anzahl der Pufferspeicher, die Anzahl der Schreib- und Leseadressengeneratoren und die Anzahl der Stopfentscheidungsschaltungen hängt also von der Anzahl der zur Einfügung von Stopfstellen vorgesehenen Container ab. Bei Stopfvorgängen mit VC-12-Containern ist zu beachten, daß zwei aufeinanderfolgende Stopfvorgänge nach den CCITT-Empfehlungen mindestens einen Abstand von 16 STM-1-Rahmen aufweisen müssen.

In einer Weiterbildung der Erfindung ist vorgesehen, daß in der Stopfentscheidungsschaltung nach der Differenzbildung über die bestimmte Dauer zur Mittelwertbildung eine Akkumulation der Differenzwerte und anschließend ein Vergleich des Mittelwertes mit zwei vorgegebenen Extremwerten vorgesehen ist und daß die Stopfentscheidungsschaltung zur Erzeugung eines negativen Stopfsignals, wenn der Mittelwert kleiner als der niedrige Extremwert ist, und zur Erzeugung eines positiven Stopfsignals vorgesehen ist, wenn der Mittelwert größer als der hohe Extremwert ist. Eine solche Stopfentscheidungsschaltung kann aus wenigstens einer Prozessoreinheit oder diskreten Bauelementen bestehen. Werden diskrete Bauelemente verwendet, so wird die Differenzbildung in einem Subtrahierer, die Akkumulation der Differenzwerte in einem Akkumulator und der Vergleich des Mittelwertes mit zwei vorgegebenen Extremwerten in einem Komparator vorgenommen. Die beiden Extremwerte sind so gewählt, daß eine Taktanpassung mit den zur Verfügung stehenden Stopfstellen ausreichend möglich ist.

Nachdem die STM-N-Signale das Übertragungssystem durchlaufen haben, müssen die Stopfbytes auf der Empfängerseite des Übertragungssystems wieder entfernt werden. Anschließend müssen die Nutzbytes gleichmäßig verteilt werden, damit der Phasenverlauf des den Nutzbytes zugeordneten Taktsignals die Jitteranforderungen nach CCITT erfüllen kann.

Mit Jitter wird die Abweichung der Taktflanken von ihrer Sollage bezeichnet. Bei der Vergleichmäßigung der Daten wird die Hilfe eines Pufferspeichers und einer Phasenregelschleife auf der Empfangsseite des Übertragungssystems beansprucht. Hierbei lassen sich insbesondere hochfrequente Spektralanteile im Jitter durch die Tiefpaßeigenschaft der Phasenregelschleife reduzieren. Bei der obigen Ausführungsform der Stopfentscheidungsschaltung können jedoch durch die seltenen Stopfvorgänge niederfrequente Spektralanteile im Jitter auftreten, die sich nicht mit einfachen Mitteln auf der Empfangsseite reduzieren lassen. Daher ist in einer Weiterbildung der Erfindung vorgesehen, daß in der Stopfentscheidungsschaltung zusammen mit der Akkumulation der Differenzwerte eine Akkumulation von Werten einer periodischen Zahlenfolge oder einer Zufallsfolge vorgesehen ist. Die periodische Zahlenfolge kann beispielsweise einen sägezahnförmigen Verlauf aufweisen. Durch diese zusätzliche Akkumulation von Werten einer periodischen Zahlenfolge oder einer Zufallsfolge werden häufiger Stopfvorgänge vorgenommen, die die niederfrequenten Spektralanteile des Jitters verringern.

Eine weitere Verringerung des niederfrequenten Jitters wird erreicht, wenn die Stopfentscheidungsschaltung zur Bildung eines Differenzwertes von Null bei halbem Füllstand des zugeordneten Pufferspeichers, zur Multiplikation der negativen und positiven Stopfsignale mit einem konstanten Faktor und zur Akkumulation wenigstens eines multiplizierten Wertes mit einem Differenzwert vorgesehen ist. Hierbei wird die Anzahl der Stopfvorgänge ebenfalls erhöht.

Schreibadressen für den Pufferspeicher dürfen nur erzeugt werden, wenn eine Nutzinformation an einem einem Container zugeordneten Pufferspeicher anliegt. Hierzu ist eine Eingangsschaltung bestimmt, die zur Erzeugung eines Schreibtaktsignales aus einem aus dem STM-N-Signal gewonnenen Eingangstaktsignal für wenigstens einen aus einem Schreibzähler bestehenden Schreibadressengenerator und zur Bildung von Schreibtaktimpulsen nur bei anliegenden Daten des dem Schreibadressengenerators zugeordneten Containers vorgesehen ist. Werden nur Stopfvorgänge für einen VC-4-Container durchgeführt, so ist die Erzeugung eines Schreibtaktsignals für einen Schreibzähler erforderlich. Werden jedoch Stopfvorgänge für VC-12-Container durchgeführt, so ist es erforderlich, daß 63 Schreibtaktsignale für 63 Schreibzähler gebildet werden.

Leseadressen für den Pufferspeicher werden ebenfalls nur erzeugt, wenn eine Nutzinformation aus einem einem Container zugeordneten Pufferspeicher ausgelesen werden sollen. Hierzu dient die Ausgangsschaltung. Diese ist zur Erzeugung eines Lesetaktsignals aus einem von einem Oszillator erzeugten Ausgangstaktsignal für wenigstens einen aus einem Lesezähler bestehenden Leseadressengenerator und zur Bildung von Lesetaktimpulsen nur bei zur Auslesung aus dem Leseadressengenerator zugeordneten Pufferspeicher vorgesehenen Daten des zugeordneten Containers bestimmt.

Des weiteren ist die Ausgangs schaltung noch zur Erzeugung eines Lesetaktsignals bei einem negativen Stopfsignal und zur Unterbrechung der Erzeugung des Lesetaktsignals bei einem positiven Stopfsignal vorgesehen.

Ausführungsbeispiele der Erfindung werden nachstehend anhand der Figuren näher erläutert. Es zeigen
- Fig. 1: eine schematische Darstellung des STM-1-Rahmen mit einem VC-4-Container,
- Fig. 2: eine Multiplexstruktur in der synchronen digitalen Hierarchie,
- Fig. 3: eine schematische Darstellung eines Übertragungssystems für die digitale synchrone Hierarchie
- Fig. 4: ein Blockschaltbild eines Teils des Übertragungssystems nach Fig. 3,
- Fig. 5: mehrere STM-1-Rahmen mit einem negativen und positiven Stopfvorgang für einen VC-4-Container,
- Fig. 6: ein erstes Ausführungsbeispiel einer in Fig. 4 verwendeten Anpassungsschaltung,
- Fig. 7 bis 9: Stopfentscheidungsschaltungen, die in der Fig. 6 verwendet werden,
- Fig. 10a bis 10d: die Strukturierung der VC-12-Container in einem VC-4-Container und
- Fig. 11: ein weiteres Ausführungsbeispiel einer Anpassungsschaltung nach Fig. 4.

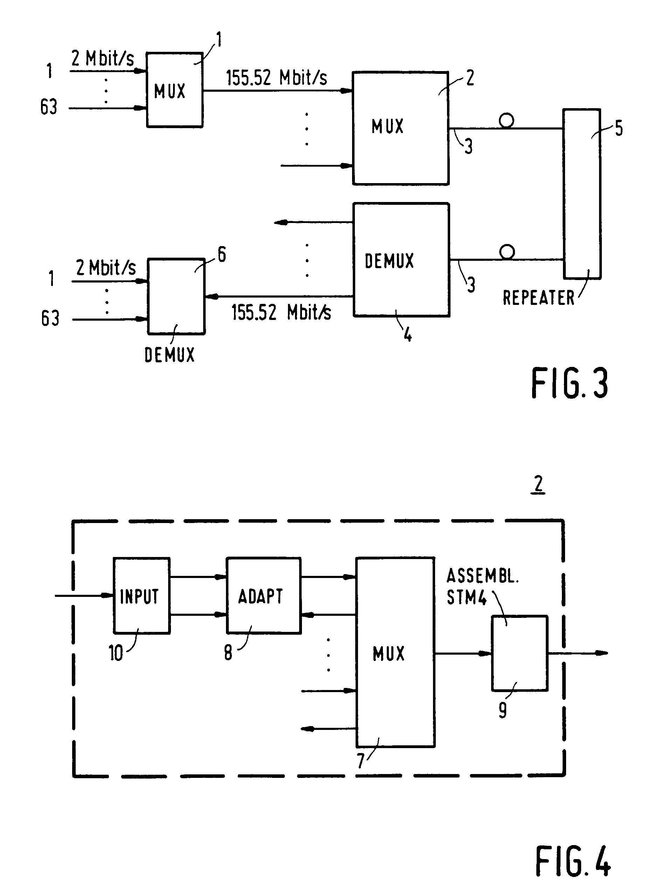

Das in Fig. 3 dargestellte Übertragungssystem für die digitale synchrone Hierarchie weist eine Sendeschaltung 1 auf, die 63 2-MBit/s-Signale zu einem 155,52-MBit/s-Signal zusammenfaßt. Diese Signale werden dabei in einem VC-4-Container zusammengefaßt, der in der Fig. 1 näher dargestellt ist. Die Sendeschaltung 1 gibt also ein STM-1-Signal ab. In einer Schaltung 2 werden insgesamt vier STM-1-Signale zu einem STM-4-Signal zusammengefaßt, welches über eine optische Übertragungsstrecke 3 zu einer Schaltung 4 gegeben wird; die aus dem STM-4-Signal vier STM-1-Signale bildet. In der optischen Übertragungsstrecke 3 ist noch eine Regeneratorschaltung 5 eingefügt. Ein STM-1-Signal wird einer Empfangsschaltung 6 zugeführt, die aus dem 155,52-MBit/s-Signal (STM-1-Signal) 63 2-MBit/s-Signale erzeugt.

In der Fig. 4 ist ein Teil der Schaltung 2 dargestellt. Einem Multiplexer 7 werden vier STM-1-Signale von jeweils einer Anpassungsschaltung 8 zugeführt. In der Fig. 4 ist der Einfachheit halber nur eine Anpassungsschaltung 8 dargestellt. Die Anpassungsschaltung 8 dient zum Ausgleich von Phasenschwankungen und kleinen Frequenzabweichungen, die zwischen einem aus dem Eingangssignal der Anpassungsschaltung 8 abgeleiteten Taktsignal und einem von einem separaten Oszillator abgeleiteten Taktsignal bestehen. Der Anpassungsschaltung 8 wird das Oszillatortaktsignal über den Multiplexer 7 geliefert. Vor der Anpassungsschaltung 8 ist noch eine Schaltung 10 angeordnet, die zur Taktrückgewinnung, Fehlerauswertung und zum Descrambeln dient. Der aus dem zugeführten STM-1-Signal gewonnene Takt wird der Anpassungsschaltung 8 über eine weitere Leitung zugeführt. Nachdem die vier STM-1-Signale in dem Multiplexer 7 zusammengefaßt worden sind, werden sie in der Schaltung 9 mit einem Takt verkoppelt, verscrambelt, und es findet eine SOH-Einblendung statt. Wie bei der Beschreibung der Fig. 1 erwähnt, ist unter SOH ein "Section Overhead" zu verstehen. Das ist ein Teil im STM-1-Rahmen, der Steuerungs- und Fehlererkennungs-Informationen erhält.

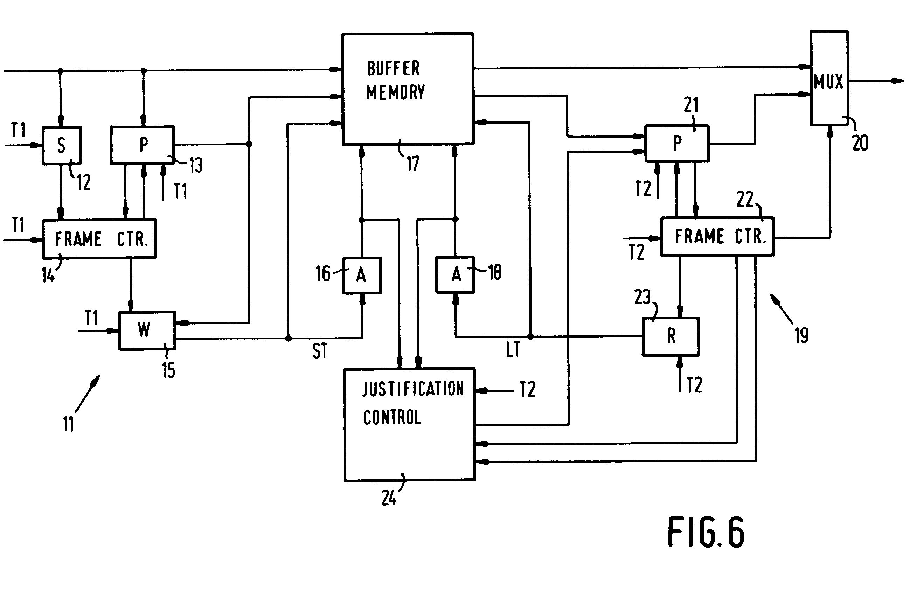

Zum Ausgleich der Phasenschwankungen werden in der Anpassungsschaltung an fest vorgegebenen Stopfstellen entweder negative oder positive Stopfbytes eingefügt. Wie sich ein solcher Stopfvorgang auf den STM-1-Rahmen auswirkt, wird im folgenden anhand der Fig. 5 erläutert. In einem STM-1Rahmen kann ein VC-4-Container im Nutzinformationsfeld P (STM-1-Payload) an vielen fest vorgegebenen Stellen beginnen. Wann ein solcher VC-4-Rahmen beginnt, ist in den ersten beiden Feldern H1 und H2 der Verwaltungseinheit AU-P enthalten. Jeder VC-4-Container beginnt mit einem Byte, das als "J1" bezeichnet wird. Wenn nicht gestopft werden soll, sind im dritten Feld H3 der Verwaltungseinheit AU-P drei Bytes ohne Information vorhanden. Dies kennzeichnet der Übergang der beiden Rahmen n-2 und n-1 in Fig. 5. Bei einem negativen Stopfvorgang, wie er im Rahmen n der Fig. 5 dargestellt ist, wird an der Stopfstelle, an der sonst die drei Bytes von H3 stehen, Nutzinformation übertragen. Bei einem positiven Stopfvorgang, wie er in dem Rahmen n+2 der Fig. 5 dargestellt ist, werden an den auf das Feld H3 folgenden drei Bytes Nutzinformationen ausgelassen.

In der Fig. 6 ist ein erstes Ausführungsbeispiel für eine Anpassungsschaltung 8 dargestellt. Einer Eingangsschaltung 11, die eine erste Synchronisationsschaltung 12, eine erste Auswerteschaltung 13, einen ersten Rahmenzähler 14 und einen zweiten Rahmenzähler 15 enthält, werden ein Eingangstaktsignal T1 und Daten eines STM-1-Signales zugeführt. Die erste Synchronisationsschaltung 12 ermittelt den Beginn eines STM-1-Rahmens anhand mehrerer Bytes, die am Anfang jedes STM-1-Rahmens stehen. Nachdem die erste Synchronisationsschaltung 12 den Beginn eines STM-1-Rahmens erkannt hat, wird der erste Rahmenzähler 14 auf einen Zähleranfang gesetzt. Dieser erste Rahmenzähler 14 erhöht seinen Zählerinhalt pro Byte eines STM-1-Rahmens. Der erste Rahmenzähler 14 startet und stoppt den zweiten Rahmenzähler 15, der nur dann ein Schreibtaktsignal ST erzeugt, wenn Daten des VC-4-Containers anliegen. Des weiteren steuert der erste Rahmenzähler 14 noch die erste Auswerteschaltung 13, der die Bytes im H1- und H2-Feld zugeführt werden. Die erste Auswerteschaltung 13 erkennt anhand des Inhaltes der Felder H1 und H2 den Beginn eines VC-4-Containers und gibt zu Beginn eines solchen VC-4-Containers einen Impuls zum zweiten Rahmenzähler 15, der daraufhin seinen Zähler auf einen Anfangswert setzt. In den Bytes der H1- und H2-Felder ist auch die Information enthalten, ob eine negative oder positive Stopfstelle auftritt. Eine solche Information über eine negative oder positive Stopfstelle wird von der ersten Auswerteschaltung 13 dem ersten Rahmenzähler 14 mitgeteilt, der daraufhin den zweiten Rahmenzähler 15 eher oder später startet. Bei einer negativen Stopfstelle wird der zweite Rahmenzähler 15 eher gestartet, weil an der Stopfstelle Nutzinformationen vorhanden sind. Bei einer positven Stopfstelle wird der zweite Rahmenzähler 15 später gestartet.

Der zweite Rahmenzähler 15 führt das von ihm erzeugte Schreibtaktsignal ST einem Schreibadressengenerator 16 zu, der aus einem Schreibzähler besteht. Mit jedem Schreibtaktsignal ST erzeugt der Schreibadressengenerator 16 eine Schreibadresse, unter der die zugehörige Nutzinformation (im VC-4-Container) in einen Pufferspeicher 17 eingeschrieben wird. Dem Pufferspeicher 17 wird außer den Nutzinformationen des STM-1-Signales noch das Schreibtaktsignal ST zugeführt. In den Pufferspeicher 17 wird auch eine Markierung eingelesen, die den Beginn eines VC-4-Containers kennzeichnet und von der ersten Auswerteschaltung 13 geliefert wird. Diese Markierung ist unter der Adresse abgelegt, die die erste Nutzinformation eines VC-4-Containers kennzeichnet.

Zur Auslesung der Daten aus dem Pufferspeicher 17 ist erforderlich, daß Leseadressen und ein Lesetaktsignal LT erzeugt werden. Leseadressen erzeugt ein Leseadressengenerator 18, der aus einem Lesezähler besteht und dem das Lesetaktsignal LT von einer Ausgangsschaltung 19 zugeführt wird. Mit jedem Lesetaktsignal LT werden aus dem Pufferspeicher 17 Nutzinformationen ausgelesen, die zu einem Umschalter 20 geleitet werden. In der Ausgangsschaltung 19 ist eine zweite Auswerteschaltung 21, ein dritter Rahmenzähler 22 und ein vierter Rahmenzähler 23 enthalten, denen ein Ausgangstaktsignal T2 von einem Oszillator zugeführt wird, wie in der Fig. 4 beschrieben ist. Die Dauer eines Taktes des Ausgangstaktsignales entspricht im wesentlichen der Dauer des Auftretens eines Bytes im STM-1-Rahmen. Der dritte Rahmenzähler 22 startet und stoppt den vierten Rahmenzähler 23, der nur dann das Lesetaktsignal LT erzeugt, wenn eine Nutzinformation eines VC-4-Containers aus dem Pufferspeicher 17 ausgelesen werden soll. Des weiteren teilt der dritte Rahmenzähler 22 der zweiten Auswerteschaltung 21 mit, wann die Felder H1 und H2 im STM-1-Rahmen auftreten. Die zweite Auswerteschaltung 21 erhält noch aus dem Pufferspeicher 17 die Markierungsinformation, wann ein VC-4-Container beginnt. Entsprechend dieser Markierungs-Information werden die Bytes der Felder H1 und H2 codiert.

Des weiteren ist noch eine Stopfentscheidungsschaltung 24 vorhanden, die entscheidet, wann eine negative oder positive Stopfstelle im STM-1-Rahmen auftritt. Diese Information der Stopfentscheidungsschaltung 24 wird der zweiten Auswerteschaltung 21 zugeführt. Das Auftreten einer positiven oder negativen Stopfstelle wird von der zweiten Auswerteschaltung 21 dem dritten Rahmenzähler 22 mitgeteilt, der aufgrund dieser Information den vierten Rahmenzähler 23 eher startet oder stoppt. Des weiteren steuert der dritte Rahmenzähler 22 noch den Umschalter 20, der die Nutzinformationen vom Pufferspeicher 17 und die Bytes der Felder H1 und H2 von der zweiten Auswerteschaltung 21 erhält. Bei einer positiven Stopfstelle werden von der zweiten Auswerteschaltung 21 noch drei Bytes zusätzlich, die keine Nutzinformation tragen, abgegeben. Bei einer negativen Stopfstelle werden Nutzinformationen vom Pufferspeicher 17 drei Bytes eher abgegeben.

Der dritte Rahmenzähler 22 erzeugt noch ein Rahmentaktsignal und ein Zeilentaktsignal, welche der Stopfentscheidungsschaltung 24 zugeführt werden. Die Dauer eines Zeilentaktes ist gleich der Dauer einer Zeile und die Dauer eines Rahmentaktes ist gleich der Dauer eines Rahmens. Die Stopfentscheidungsschaltung 24 erhält auch noch die Stopfinformation von der ersten Auswerteschaltung 13, ob eine positive, negative oder keine Stopfstelle vorliegt.

Die Schaltungselemente 12 bis 15 der Eingangsschaltung 11 und die Schaltelemente 21 bis 23 der Ausgangsschaltung 19 bestehen aus Prozessorbausteinen, die ein Programm ausführen. Im folgenden ist für jedes Schaltungsselement 12 bis 15 und 21 bis 23 ein schematisch skizzierter Programmablauf dargestellt:

### Erste Synchronisationsschaltng 12:

1. Ermittle den Beginn des STM-1-Rahmens aus Daten;
2. Setze ersten Rahmenzähler 14 auf Zähleranfang, wenn Rahmenbeginn erkannt;

### Erster Rahmenzähler 14:

1. Wenn Zähleranfang vorliegt, setze Zählerinhalt auf Null;
2. Erhöhe Zählerinhalt um eine Einheit;
3. Wenn VC-4-Daten oder eine negative Stopfstelle vorliegt, dann starte zweiten Rahmenzähler 15;
4. Wenn keine VC-4-Daten oder eine postive Stopfstelle vorliegt, dann stoppe den zweiten Rahmenzähler 15;
5. Teile der ersten Auswerteschaltung 13 den Beginn der H1- und H2-Felder mit;

### Erste Auswerteschaltung 13:

1. Bei Vorliegen der H1- und H2-Felder ermittle deren Inhalt;
2. Teile dem ersten Rahmenzähler 14 und gegebenenfalls der Stopfentscheidungsschaltung 24 mit, ob eine negative oder positive oder keine Stopfstelle vorliegt;
3. Starte Zählvorgang bis zum Erreichen des Anfanges des VC-4-Containers;
4. Nach Erreichen des Anfangs des VC-4-Containers, sende eine Markierung an den Pufferspeicher 15 und setze zweiten Rahmenzähler 15 auf Zähleranfang;

### Zweiter Rahmenzähler 15:

1. Wenn Zähleranfang vorliegt, setze Zählerinhalt auf Null;
2. Wenn Start vom ersten Rahmenzähler 14 freigegeben ist, erhöhe Zählerinhalt um eine Einheit; sonst verbleibe bei altem Zählerinhalt;
3. Gib bei jeder Erhöhung des Zählerinhaltes einen Takt des Schreibtaktsignales ST aus;

### Zweite Auswerteschaltung 22:

1. Bilde die H1-, H2-, H3-Felder und gegebenenfalls eine positive Stopfstelle anhand der Markierungsinformation aus dem Pufferspeicher 17 und der Stopfentscheidung der Stopfentscheidungsschaltung 24;
2. Teile dem dritten Rahmenzähler 22 die Stopfinformation mit und gibt die Markierungsinformation an dritten Rahmenzähler 22;

### Dritter Rahmenzähler 22:

1. Setze bei Beginn eines STM-1-Rahmens Zähleranfang auf Null;
2. Erhöhe Zählerinhalt um eine Einheit;
3. Setze bei Auftreten einer Markierung den vierten Rahmenzähler 23 auf Zähleranfang;
4. Wenn VC-4-Daten oder eine negative Stopfstelle vorliegt, starte zweiten Rahmenzähler 15;
5. Wenn keine VC-4-Daten oder eine positive Stopfstelle vorliegt, dann stoppe den zweiten Rahmenzähler 15;
6. Teile der zweiten Auswerteschaltung den Beginn des H1- und H2-Feldes mit;
7. Verbinde Ausgang des Pufferspeichers 17 mit dem Ausgang des Umschalters 20, wenn VC-4-Daten vorliegen; Verbinde Ausgang der zweiten Auswerteschaltung 21 mit dem Ausgang des Umschalters 20, wenn H1-, H2- und H3-Felder und eine positive Stopfstelle vorliegt;
8. Erzeuge Taktsignale und ein Anhaltesignal für die Stopfentscheidungsschaltung 24;

### Vierter Rahmenzähler 23:

1. Wenn Zähleranfang vorliegt, setze Zählerinhalt auf Null;
2. Wenn Start vom dritten Rahmenzähler 22 freigegeben ist, erhöhe Zählerinhalt um eine Einheit; sonst verbleibe bei altem Zählerinhalt;
3. Gib bei jeder Erhöhung des Zählerinhalts einen Takt des Lesetaktsignales LT aus.

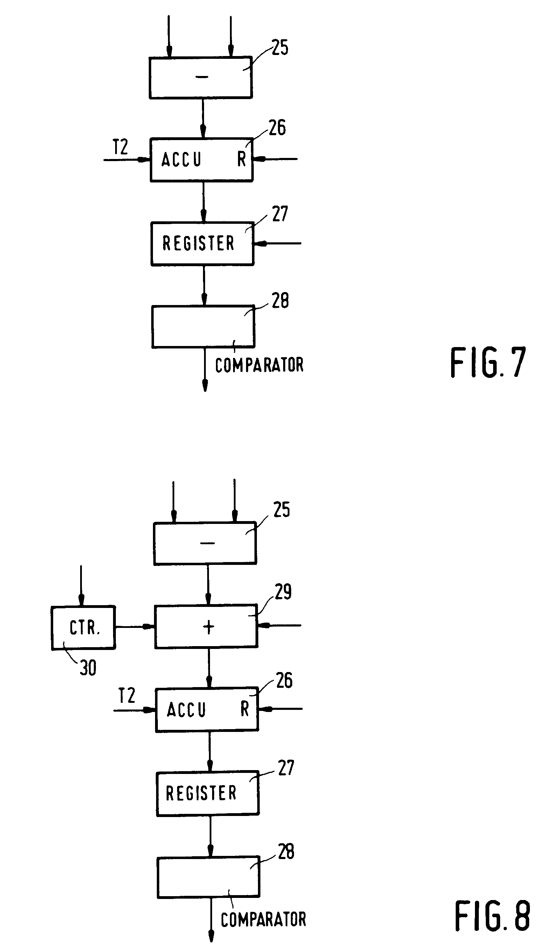

Im folgenden wird ein erstes Ausführungsbeispiel einer Stopfentscheidungsschaltung 24 anhand der Fig. 7 erläutert. Die Schreibadressen des Schreibadressengenerators 16 und die Leseadressen des Leseadressengenerators 18 werden einem Subtrahierer 25 zugeführt, der einen Differenzwert bildet. Bei einem halben Füllstand des Pufferspeichers 17 ist der vom Subtrahierer 25 abgegebene Differenzwert gleich Null. In dem nachgeschalteten Akkumulator 26 werden die Differenzwerte über eine bestimmte Dauer akkumuliert. Diese Dauer beträgt eine Zeile. Nach einer Zeile wird der Akkumulator 26 auf Null zurückgesetzt. Diese Zurücksetzung erfolgt durch ein Zeilentaktsignal, das in der Fig. 6 der dritte Rahmenzähler 22 erzeugt. Die Dauer eines Zeilentaktes ist gleich der Dauer einer Zeile. Der dritte Rahmenzähler 22 erzeugt außerdem noch ein Rahmentaktsignal. Die Dauer eines Rahmentaktes des Rahmentaktsignals ist gleich der Dauer eines STM-1-Rahmens. Das Akkumulationsergebnis über eine Zeile wird am Ende eines Rahmens von einem Register 27 übernommen. Diesem Register wird das Rahmentaktsignal zugeführt. Die Dauer einer Mittelwertbildung ist gleich der Dauer einer Zeile. Zur Mittelwertbildung wird nur die letzte Zeile des Rahmens benötigt. Diese Übernahme des Mittelwertes erfolgt am Ende eines Rahmens in das Register 27. In dem nachgeschalteten Komparator 28 wird das im Register 27 gespeicherte Ergebnis mit einem niedrigen und einem hohen Extremwert verglichen. Wird der niedrige Extremwert unterschritten, so wird ein negatives Stopfsignal und wird der hohe Extremwert überschritten, so wird ein positives Stopfsignal erzeugt. Die beiden Extremwerte sind so gewählt, daß bei den möglichen Phasenschwankungen und zur Verfügung stehenden Stopfstellen eine ausreichende Anpassung des Signales an das Lesetaktsignal erfolgen kann (vgl. CCITT Recommendation G 783).

Eine weitere Ausführungsform einer Stopfentscheidungsschaltung ist in Fig. 8 gezeigt. Diese enthält ebenfalls einen Subtrahierer 25, der die Schreibadressen vom Schreibadressengenerator 16 und die Leseadressen vom Leseadressengenerator 18 erhält. Die Ausgangswerte bzw. Differenzwerte des Subtrahierers 25 werden einem Addierer 29 zugeleitet. Dieser erhält noch Werte von einem Zähler 30, der von einem Rahmentaktsignal getaktet wird. Über mehrere Rahmentakte ergibt sich somit ein sägezahnförmiger Verlauf der Ausgangswerte des Zählers 30. Die Ausgangswerte des Addierers 29 werden dem Akkumulator 26 zugeführt, der über eine Zeile akkumuliert. Das Akkumulationsergebnis wird am Ende eines Rahmens durch ein Rahmentaktsignal in das Register 27 übernommen. In dem nachfolgenden Komparator 28 wird dann, wie in der Stopfentscheidungsschaltung nach Fig. 7 beschrieben, entschieden, ob ein negatives oder positives Stopfsignal erzeugt wird.

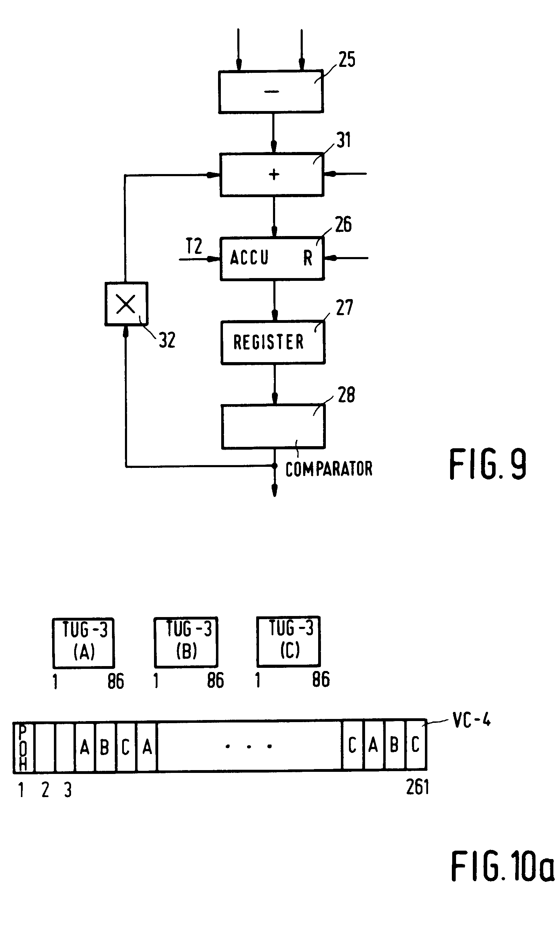

Eine dritte Ausführungsform einer Stopfentscheidungsschaltung 24 ist in der Fig. 9 gezeigt. Dem Subtrahierer 25 werden die Leseadressen und die Schreibadressen zugeführt. Die Differenzwerte werden einem Addierer 31 zugeführt, der jeden Differenzwert mit einem weiteren von einem Multiplizierer 32 stammenden Ausgangswert addiert. In dem Multiplizierer 32 wird das negative oder positive Stopfsignal, welches der Komparator 28 abgibt, mit einem konstanten Faktor multipliziert. Der Faktor bewirkt eine Stabilisierung der Anpassungsschaltung 8, und er sollte so gewählt werden, daß nach einem Stopfvorgang, der durch ein Stopfsignal bewirkt wird, der Ausgangswert des Addierers 31 sich gegenüber dem Differenzwert am Subtrahierer 25 um das ein- bis zweifache ändert. Anschließend wird wie bei den beiden Stopfentscheidungsschaltungen 24 nach den Figuren 7 und 8 eine Akkumulation in dem Akkumulator 26 und eine Speicherung im Register 27 vorgenommen. Die Stopfentscheidungsschaltungen 24 nach den Figuren 8 und 9 weisen gegenüber der Stopfentscheidungsschaltung 24 nach Fig. 7 geringere niederfrequente Spektralanteile beim Jitter der Taktfrequenz auf, die in einer Empfangsschaltung 6 (Fig. 3) zur Gewinnung der Nutzinformation auftritt.

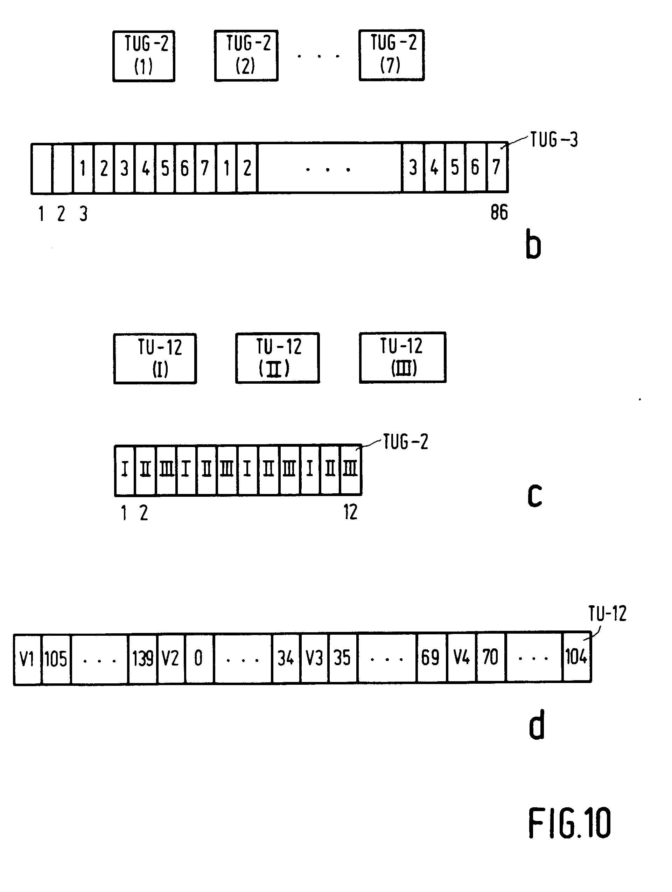

Bei dem in Fig. 6 beschriebenen Ausführungsbeispiel einer Anpassungsschaltung 8 (Fig. 4) ist auf einen Stopfvorgang für einen VC-4-Container eingegangen worden. Im Anschluß soll eine Anpassungsschaltung beschrieben werden, die Stopfvorgänge für VC-12-Container vorsieht. In den Figuren 10a bis 10d ist die Verschachtelung der VC-12-Container in einem VC-4-Container dargestellt. In Fig. 10a ist ein VC-4-Container gezeigt, in dem jeweils drei TUG-3-Container enthalten sind. In dem ersten Rahmen des VC-4-Containers ist der POH enthalten. Die Rahmen 2 und 3 weisen Bytes ohne Inhalt auf, und in den folgenden Rahmen sind jeweils abwechselnd Rahmen der drei TUG-3-Container enthalten. So ist beispielsweise im vierten Rahmen des VC-4-Containers der erste Rahmen des ersten TUG-3-Containers, im fünften Rahmen der erste Rahmen des zweiten TUG-3-Containers und im sechsten Rahmen der erste Rahmen des dritten TUG-3-Containers enthalten.

Wie Fig. 10b zeigt, besteht ein TUG-3-Container aus einer Verschachtelung von sieben TUG-2-Containern. In dem TUG-3-Container sind die ersten beiden Rahmen durch Bytes ohne Inhalt gefüllt, und in den darauffolgenden Rahmen werden jeweils abwechselnd Rahmen der sieben TUG-2-Container eingefügt. Ein TUG-2-Container besteht aus drei TU-12-Containern. In den TUG-2-Container werden abwechselnd Rahmen der drei TU-12-Container eingefügt. Ein TU-12-Container ist gegenüber einem VC-12-Container durch zusätzliche Pointer-Bytes ergänzt. Wie Fig. 10d zeigt, besteht ein TU-12-Container aus jeweils vier Untereinheiten von jeweils 36 Bytes, wobei eine Untereinheit durch ein Pointer-Byte und 35 weitere Bytes gefüllt ist. In einem STM-1-Rahmen wird dabei zuerst die erste Untereinheit beim nächsten Rahmen die zweite Untereinheit, beim dritten Rahmen die dritte Untereinheit und beim vierten Rahmen die vierte Untereinheit eingefügt. Eine positive Stopfstelle ist in dem TU-12-Container an der Stelle, die mit 35 bezeichnet ist, enthalten. Die negative Stopfstelle ist das Pointer-Byte V3. Ein VC-12-Container wird mit einem Byte, das mit V5 bezeichnet ist, begonnen. Dieses Byte könnte beispielsweise an der Stelle, die mit "0" bezeichnet ist, stehen.

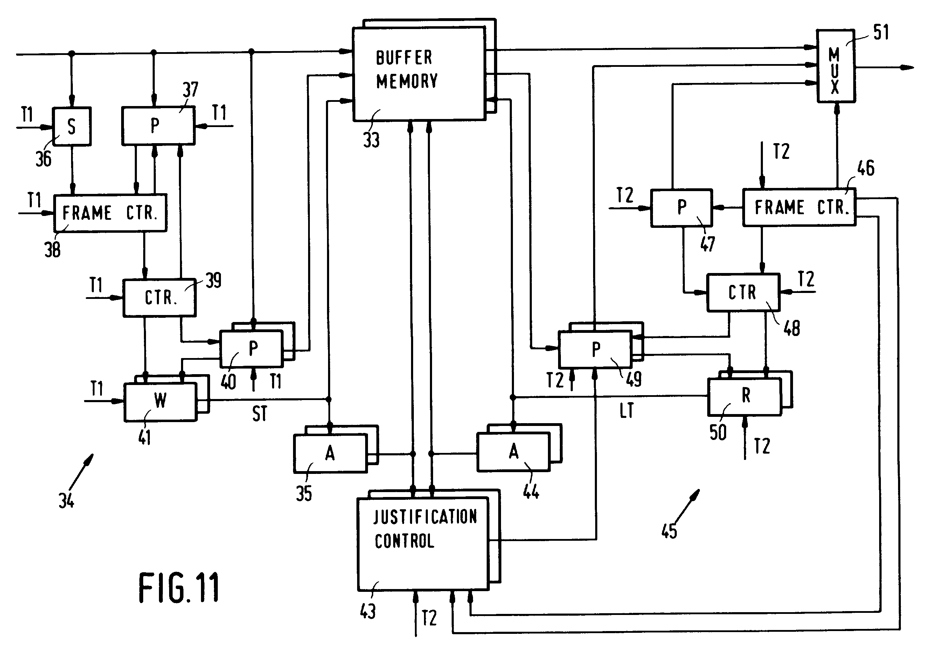

Eine Anpassungsschaltung 8, die zur Stopfung bei VC-12-Containern geeignet ist, ist in der Fig. 11 dargestellt. Da in einem VC-4-Container 63 VC-12-Container enthalten sind, ist für jeden VC-12-Container ein Pufferspeicher 33 vorhanden. Jeder Schreibvorgang eines Pufferspeichers 33 wird von einer Eingangsschaltung 34 und von Schreibadressengeneratoren 35 gesteuert. Die Eingangsschaltung 34 enthält eine zweite Synchronisationsschaltung 36, eine dritte Auswerteschaltung 37, einen fünften
Rahmenzähler 38, einen sechsten Rahmenzähler 39, 63 erste Unterauswerteschaltungen 40 und 63 erste Unterrahmenzähler 41. Alle Schaltungen 36 bis 41 in der Eingangsschaltung 34 erhalten das Eingangstaktsignal T1. In der zweiten Synchronisationsschaltung 36 wird der Rahmenanfang anhand mehrerer Bytes am Anfang eines STM-1-Rahmens festgestellt. Dann wird der fünfte Rahmenzähler 38 von der zweiten Synchronisationsschaltung 36 gestartet. In der dritten Auswerteschaltung 37 wird durch Auswertung der Felder H1 und H2 festgestellt, wo der Startpunkt des VC-4-Containers liegt. Dazu wird der dritten Auswerteschaltung 37 vom fünften Rahmenzähler 38 die Position der Felder H1 und H2 mitgeteilt. Falls sich durch Auswertung der Felder H1 und H2 ergibt, daß eine negative oder positive Stopfstelle vorhanden ist, wird dies dem fünften Rahmenzähler 38 von der dritten Auswerteschaltung 37 mitgeteilt. Der fünfte Rahmenzähler 38 startet und stoppt den sechsten Rahmenzähler 39. Der sechste Rahmenzähler 39 erzeugt ein Taktsignal für die ersten Unterrahmenzähler 41. Der sechste Rahmenzähler 39 gibt dabei nur dann ein Taktsignal ab, wenn Daten des VC-4-Containers vorhanden sind. Den ersten Unterauswerteschaltungen 40 werden noch vom sechsten Rahmenzähler 39 die zeitliche Lage der Bytes V1 bis V4 der VC-12-Container und die zeitliche Lage eines H4-Bytes im POH des VC-4-Containers mitgeteilt. Das H4-Byte gibt an, welches der Bytes V1 bis V4 vorliegt, und die Pointer-Bytes V1 und V2 geben die Position des V5-Bytes in einem VC-12-Container an. Die ersten Unterauswerteschaltungen 40 teilen den zugeordneten ersten Unterrahmenzählern 41 den Beginn eines VC-12-Containers mit. Außerdem wird durch Auswertung der Pointer-Bytes V1 und V2 ermittelt, ob negative oder positive Stopfstellen in einem VC-12-Container vorhanden sind. Den Beginn eines VC-12-Containers wird in jedem zugeordneten Pufferspeicher 33 durch eine Markierung von der zugeordneten ersten Unterauswerteschaltung 40 gekennzeichnet.

Die ersten Unterrahmenzähler 41 erzeugen Schreibtaktsignale ST für den jeweiligen zugeordneten Pufferspeicher 33 und den jeweiligen zugeordneten Schreibdressengenerator 35. Unter der von einem Schreibadressengenerator 35 erzeugten Schreibadresse wird eine Nutzinformation in den Pufferspeicher 33 eingeschrieben. Der Schreibadressenausgang jedes Schreibadressengenerators 35 ist mit Stopfentscheidungsschaltungen 43 verbunden. Jedem Pufferspeicher 33 und jeder Stopfentscheidungsschaltung 43 sind noch Leseadressengeneratoren 44 zugeordnet, die jeweils Leseadressen für den Auslesevorgang aus einem Pufferspeicher 33 erzeugen. Gesteuert werden die Leseadressengeneratoren 44 über ein Lesetaktsignal LT von einer Ausgangsschaltung 45.

Die Ausgangsschaltung 45 enthält einen siebten Rahmenzähler 46, eine vierte Auswerteschaltung 47, einen achten Rahmenzähler 48, 63 zweite Unterauswerteschaltungen 49 und 63 zweite Unterrahmenzähler 50. Jede dieser Schaltungen in der Ausgangsschaltung 45 erhalten ein Ausgangstaktsignal T2. Der siebte Rahmenzähler 46 startet und stoppt den achten Rahmenzähler, der Taktsignale erzeugt, wenn Daten des VC-4-Containers ausgelesen werden sollen. Des weiteren gibt der siebte Rahmenzähler 46 die Position der Felder H1 und H2 an. Der siebte Rahmenzähler 46 führt auch den Stopfentscheidungsschaltungen 43 ein Rahmentaktsignal und ein Anhaltesignal zu. Die Stopfentscheidungsschaltungen 43 sind nur während eines STM-1-Rahmens aktiv und werden über 15 STM-1-Rahmen durch das Anhaltesignal angehalten.

Die vierte Auswerteschaltung 47 führt einem Umschalter 51 jeweils die Bytes der Felder H1 und H2 zu und gibt den Anfang eines VC-4-Containers an. Die vierte Auswerteschaltung 47 gibt dem achten Rahmenzähler 48 noch den Beginn eines VC-4-Containers an, der, da nur Stopfstellen innerhalb der TU-12-Container vorkommen, immer an der gleichen Stelle liegt. Der achte Rahmenzähler 48 gibt ein Taktsignal an die zweiten Unterrahmenzähler 50, die die Lesetaktsignale LT für die Leseadressengeneratoren 44 erzeugen. Des weiteren gibt der achte Rahmenzähler 48 noch die zeitliche Lage der Pointer-Bytes V1 bis V4 an die zweite Unterauswerteschaltung 49. Die Stopfentscheidungsschaltungen 43, die in den Figuren 7 bis 9 dargestellt sind, geben das Stopfsignal an die zweiten Unterauswerteschaltungen 49 ab. Es sei noch erwähnt, daß hierbei die Mittelungsdauer, d.h. die Dauer einer Akkumulation, der Dauer eines STM-1-Rahmens entspricht. Anhand der Stopfsignale entscheiden die zweiten Unterauswerteschaltungen 49, ob eine negative oder positive Stopfstelle in den TU-12-Containern vorhanden ist. Eine solche Stopfstelle wird noch den zweiten Unterrahmenzählern 50 mitgeteilt, die daraufhin eher oder später mit der Erzeugung eines Lesetaktsignales LT beginnen. Die zweiten Unterauswerteschaltungen 49 liefern an den Umschalter 51 die Pointer-Bytes V1 bis V4. Außerdem erhält der Umschalter 51 noch die Nutzinformationen bzw. Daten aus den Pufferspeichern 33. Gesteuert wird der Umschalter 51 von dem siebten Rahmenzähler 46.

Auch bei dem Ausführungsbeispiel einer Anpassungsschaltung 8 nach Fig. 11 bestehen die Schaltungselemente 36 bis 41 der Eingangsschaltung 34 und die Schaltungselemente 46 bis 50 der Ausgangsschaltung 45 aus Prozessorbausteinen, die ein fest gespeichertes Programm ausführen.

Im folgenden ist für jedes Schaltungselement 36 bis 41 und 46 bis 50 ein schematisch skizzierter Programmablauf dargestellt:

### Zweite Synchronisationsschaltung 36:

1. Ermittle den Beginn des STM-1-Rahmens aus Daten;
2. Setze fünften Rahmenzähler 38 auf Zähleranfang, wenn Rahmenanfang erkannt;

### Fünfter Rahmenzähler 38:

1. Wenn Zähleranfang vorliegt, setze Zählerinhalt auf Null;
2. Erhöhe Zählerinhalt um eine Einheit;
3. Wenn VC-4-Daten oder eine negative Stopfstelle (VC-4-Container) vorliegen, dann starte sechsten Rahmenzähler 39;
4. Wenn keine VC-4-Daten oder eine positive Stopfstelle (VC-4-Container) vorliegen, dann stoppe den sechsten Rahmenzähler 39;
5. Teile der dritten Auswerteschaltung 37 den Beginn des H1- und H2-Feldes mit;

### Dritte Auswerteschaltung 37:

1. Bei Vorliegen der H1- und H2-Felder ermittle deren Inhalt;
2. Teile dem fünften Rahmenzähler 38 mit, ob eine und welche Stopfstelle vorliegt (VC-4-Container);
3. Starte Zählvorgang bis zum Erreichen des Anfangs des VC-4-Containers;
4. Nach Erreichen des Anfangs des VC-4-Containers setze fünften Rahmenzähler 38 auf Zähleranfang;

### Sechster Rahmenzähler 39:

1. Wenn Zähleranfang vorliegt, setze Zählerinhalt auf Null;
2. Wenn Start vom fünften Rahmenzähler 38 freigegeben ist, erhöhe Zählerinhalt um eine Einheit; sonst verbleibe beim alten Zählerinhalt;
3. Gib bei jeder Erhöhung des Zählerinhaltes einen Takt des Taktsignals an die ersten Unterrahmenzähler 41;
4. Teile den ersten Unterauswerteschaltungen 40 die zeitliche Lage der Pointer-Bytes V1 bis V4 der VC-12-Container und des Bytes H4 im POH des VC-4-Containers mit;
5. Gib den ersten Unterauswerteschaltungen 40 an, ob Daten des zugeordneten VC-12-Containers vorliegen;

### Erste Unterauswerteschaltungen 40:

1. Ermittle den Inhalt der V1- und V2-Pointer-Bytes;
2. Teile den zugeordneten ersten Unterrahmenzählern 41 den Beginn eines VC-12-Containers mit; setze damit den Zählerinhalt des zugeordneten ersten Unterrahmenzählers 41 auf Zähleranfang;
3. Nach Erreichen des Anfangs eines VC-12-Containers sende Markierung zu den zugeordneten Pufferspeicher 33;
4. Wenn Daten des zugeordneten VC-12-Containers oder eine negative Stopfstelle vorliegt, dann starte zugeordneten ersten Unterrahmenzähler 41;
5. Wenn keine Daten des zugeordneten VC-12-Containers oder eine positive Stopfstelle vorliegt, dann stoppe zugeordneten ersten Unterrahmenzähler 41;

### Erster Unterrahmenzähler 41:

1. Wenn Zähleranfang vorliegt, setze Zählerinhalt auf Null;
2. Wenn Start von zugeordneter erster Unterauswerteschaltung 40 freigegeben, erhöhe Zählerinhalt um eine Einheit; sonst verbleibe bei altem Zählerinhalt;
3. Gib bei jeder Erhöhung des Zählerinhaltes einen Takt des Schreibtaktsignales ST aus;

### Siebter Rahmenzähler 46:

1. Setze bei Beginn eines STM-1-Rahmens Zähleranfang auf Null;
2. Erhöhe Zählerinhalt um eine Einheit;
3. Setze bei Beginn des VC-4-Rahmens den achten Rahmenzähler 48 auf Zähleranfang und gib vierter Auswerteschaltung 47 eine Information darüber;
4. Wenn Daten des VC-4-Containers vorliegen, starte den achten Rahmenzähler 48;
5. Wenn keine Daten des VC-4-Containers vorliegen, stoppe den achten Rahmenzähler 48;
6. Teile der vierten Auswerteschaltung 47 den Beginn der H1- und H2-Felder mit;
7. Verbinde Ausgang eines Pufferspeichers 33 mit dem Ausgang des Umschalters 51, wenn Daten des zugeordneten VC-12-Containers vorliegen; Verbinde Ausgang der vierten Auswerteschaltung 47 mit dem Ausgang des Umschalters 51, wenn H1-, H2- und H3-Felder vorliegen; Verbinde Ausgang einer zweiten Unterauswerteschaltung 49 mit dem Ausgang des Umschalters 51, wenn die V1- bis V4-Pointer-Bytes und das H4-Feld vorliegen;
8. Erzeuge ein Rahmentakt- und ein Zeilentaktsignal für die Stopfentscheidungsschaltungen 43;

### Vierte Auswerteschaltung 47:

1. Bilde H1-, H2- und H3-Felder anhand der Information des siebten Rahmenzählers 46 über den Beginn des VC-4-Rahmens;

### Achter Rahmenzähler 65:

1. Wenn kein Zähleranfang vorliegt, sezte Zählerinhalt auf Null;
2. Wenn Start vom siebten Rahmenzähler 46 freigegeben ist, erhöhe Zählerinhalt um eine Einheit; sonst verbleibe bei altem Zählerinhalt;
3. Gib bei jeder Erhöhung des Zählerinhaltes einen Takt des Taktsignales an die zweite Unterrahmenzähler 50;
4. Teile den zweiten Unterauswerteschaltungen 49 die zeitliche Lage der Pointer-Bytes V1 bis V4 des VC-12-Containers und des Bytes H4 im POH des VC-4-Containers mit;
5. Gib den zweiten Unterauswerteschaltungen 49 an, ob Daten des zugeordneten VC-12-Containers vorliegen;

### Zweite Unterauswerteschaltungen 49:

1. Bilde den Inhalt der V1- bis V4-Pointer-Bytes und gegebenenfalls eine positive Stopfstelle anhand der Markierungsinformation aus dem zugeordneten Pufferspeicher 33 und der Stopfentscheidung aus der zugeordneten Stopfentscheidungsschaltung 43;
2. Teile dem zugeordneten zweiten Unterrahmenzähler 50 die Markierungsinformation mit;
3. Wenn Daten des zugeordneten VC-12-Containers ausgelesen werden sollen oder eine negative Stopfstelle vorliegt, dann starte zugeordneten zweiten Unterrahmenzähler 50;
4. Wenn keine Daten des zugeordneten VC-12-Containers ausgelesen werden sollen oder eine positive Stopfstelle vorliegt, dann stoppe zugeordneten zweiten Unterrahmenzähler 50;

### Zweiter Unterrahmenzähler 50:

1. Wenn Markierungsinformation vorliegt (Zähleranfang), setze Zählerinhalt auf Null;
2. Wenn Start von zweiter Unterauswerteschaltung 49 freigegeben ist, erhöhe Zählerinhalt um eine Einheit; sonst verbleibe bei altem Zählerinhalt;
3. Gib bei jeder Erhöhung des Zählerinhaltes einen Takt des Lesetaktsignals ST aus.

Es sei noch erwähnt, daß aus Gründen der Übersichtlichkeit mehrere Leitungen teilweise als eine Leitung dargestellt sind.

## Patentansprüche

1. Übertragungsverfahren für die synchrone digitale Hierarchie, bei dem in einer Anpassungsschaltung (8)
Phasenschwankungen eines STM-N-Signales ausgeglichen werden, wobei zur Einfügung von Stopfstellen für wenigstens einen Container des STM-N-Signales in einen Pufferspeicher (17, 33) Daten des Containers eingeschrieben und aus dem Pufferspeicher (17, 33) ausgelesen werden,
dadurch gekennzeichnet,
- daß in einem Schreibadressengenerator (16, 35) Schreibadressen für die einzuschreibenden Daten und in einem Leseadressengenerator Leseadressen für die auszulesenden Daten gebildet werden,
- daß in einer Stopfentscheidungsschaltung (24, 43) über eine bestimmte Dauer eine arithmetische Mittelwertbildung der Differenzen der Adressen des Lese- und Schreibadressengenerators erfolgt, wobei ein vom Mittelwert abhängiges Stopfsignal gebildet wird, und
- daß in einer Ausgangsschaltung (19, 45) negative oder positive Stopfstellen im Container in Abhängigkeit vom Stopfsignal und ein Ausgangssignal aus den in wenigstens einem Pufferspeicher gespeicherten Daten gebildet werden.

2. Übertragungsverfahren nach Anspruch 1,
dadurch gekennzeichnet,
daß die Anzahl der Pufferspeicher (17, 33), die Anzahl der Schreib- und Leseadressengeneratoren (16, 35; 18, 44) und die Anzahl der Stopfentscheidungsschaltungen (24, 43) von der Anzahl der zur Einfügung von Stopfstellen vorgesehenen Container abhängt.

3. Übertragungsverfahren nach Anspruch 1 oder 2,
dadurch gekennzeichnet,
- daß in der Stopfentscheidungsschaltung (24, 43) nach der Differenzbildung (in 25) über die bestimmte Dauer zur arithmetischen Mittelwertbildung eine Akkumulation (in 26) der Differenzwerte und anschließend ein Vergleich (in 28) des Mittelwertes mit zwei vorgegebenen Extremwerten erfolgt, und
- daß in der Stopfentscheidungsschaltung ein negatives Stopfsignal erzeugt wird, wenn der Mittelwert kleiner als der niedrige Extremwert ist, und ein positives Stopfsignal erzeugt wird, wenn der Mittelwert größer als der hohe Extremwert ist (Fig. 7).

4. Übertragungsverfahren nach Anspruch 3,
dadurch gekennzeichnet,
daß in der Stopfentscheidungsschaltung (24, 43) zusammen mit der Akkumulation der Differenzwerte eine Akkumulation von Werten einer periodischen Zahlenfolge oder einer Zufallsfolge erfolgt (Fig. 8).

5. Übertragungsverfahren nach Anspruch 3,
dadurch gekennzeichnet,
daß in der Stopfentscheidungsschaltung (24, 43) ein Differenzwert von Null bei halbem Füllstand des zugeordneten Pufferspeichers gebildet wird, daß die negativen und positiven Stopfsignale mit einem konstanten Faktor (in 32) multipliziert werden, und daß wenigstens ein multiplizierter Wert mit einem Differenzwert akkumuliert wird (Fig. 9).

6. Übertragungsverfahren nach einem der vorhergehenden Ansprüche,
dadurch gekennzeichnet,
daß die bestimmte Dauer zur Bildung des arithmetischen Mittelwertes eine Zeilen- oder Rahmendauer oder ein ganzzahliges Vielfaches davon beträgt.

7. Übertragungsverfahren nach einem der vorhergehenden Ansprüche,
dadurch gekennzeichnet,
daß in einer Eingangsschaltung (11, 34) ein Schreibtaktsignal (ST) aus einem aus dem STM-N-Signal gewonnenen Eingangstaktsignal (T1) für wenigstens einen aus einem Schreibzähler bestehenden Schreibadressengenerator (16, 35) erzeugt wird, und daß Schreibtaktimpulse nur bei anliegenden Daten des dem Schreibadressengenerators zugeordneten Containers gebildet werden.

8. Übertragungsverfahren nach einem der vorhergehenden Ansprüche,
dadurch gekennzeichnet,
daß in der Ausgangsschaltung (19, 45) ein Lesetaktsignal (LT) aus einem von einem Oszillator erzeugten Ausgangstaktsignal (T2) für wenigstens einen aus einem Lesezähler bestehenden Leseadressengenerator (18, 44) erzeugt wird, und daß Lesetaktimpulse nur bei zur Auslesung aus dem dem Leseadressengenerator zugeordneten Pufferspeicher vorgesehenen Daten des zugeordneten Containers gebildet werden.

9. Übertragungssystem nach Anspruch 8,
dadurch gekennzeichnet,
daß in der Ausgangsschaltung (19, 45) ein Lesetaktsignal (LT) bei einem negativen Stopfsignal erzeugt wird, wobei die Erzeugung des Lesetaktsignales bei einem positiven Stopfsignal unterbrochen wird.

10. Übertragungssystem für die synchrone digitale Hierarchie mit einer Anpassungsschaltung zum Ausgleich von Phasenschwankungen eines STM-N-Signales, die zur Einfügung von Stopfstellen für wenigstens einen Container des STM-N-Signales einen Pufferspeicher (17, 33) zur Einschreibung von Daten des Containers und zur Auslesung von Daten des Containers enthält,
dadurch gekennzeichnet,
daß die Anpassungsschaltung (8)
- einen Schreibadressengenerator (16, 35) zur Bildung von Schreibadressen für die einzuschreibenden und einen Leseadressengenerator zur Bildung von Leseadressen für die auszulesenden Daten,
- eine Stopfentscheidungsschaltung (24, 43) zur arithmetischen Mittelwertbildung der Differenzen der Adressen des Lese- und Schreibadressengenerators über eine bestimmte Dauer und zur Bildung eines vom Mittelwert abhängigen Stopfsignales und
- eine Ausgangsschaltung (19, 45) zur Bildung von negativen oder positiven Stopfstellen im Container in Abhängigkeit vom Stopfsignal und zur Bildung eines Ausgangssignals aus den in wenigstens einem Pufferspeicher gespeicherten Daten enthält.

## Claims

1. Transmission method for the synchronous digital hierarchy, in which phase jitter of an STM-N signal is compensated for in an adaptation circuit (8), in which case, in order to insert justification locations for at least one container of the STM-N signal, data of the container are written to a buffer memory (17, 33) and are read from the buffer memory (17, 33),
characterized
- in that write addresses for the data to be written in are formed in a write address generator (16, 35) and read addresses for the data to be read out are formed in a read address generator,
- in that arithmetic averaging of the differences between the addresses of the read address and write address generators is carried out over a specific duration in a justification decision circuit (24, 43), a justification signal which is a function of the average value being formed, and
- in that, in an output circuit (19, 45), negative or positive justification locations are formed in the container as a function of the justification signal and an output signal is formed from the data stored in at least one buffer memory.

2. Transmission method according to Claim 1,
characterized
in that the number of buffer memories (17, 33), the number of write address and read address generators (16, 35; 18, 44) and the number of justification decision circuits (24, 43) depend on the number of containers provided for the insertion of justification locations.

3. Transmission method according to Claim 1 or 2,
characterized
- in that, in the justification decision circuit (24, 43), after the difference formation (in 25) over the specific duration for the purpose of arithmetic averaging, the difference values are accumulated (in 26) and then the average value is compared (in 28) with two predetermined extreme values, and
- in that, in the justification decision circuit, a negative justification signal is generated if the average value is less than the low extreme value and a positive justification signal is generated if the average value is greater than the high extreme value (Figure 7).

4. Transmission method according to Claim 3,
characterized
in that, together with the accumulation of the difference values, accumulation of values of a periodic number sequence or of a random sequence is carried out in the justification decision circuit (24, 43) (Figure 8).

5. Transmission method according to Claim 3,
characterized
in that, in the justification decision circuit (24, 43), a difference value of zero is formed given half occupancy of the assigned buffer memory, in that the negative and positive justification signals are multiplied by a constant factor (in 32), and in that at least one multiplied value is accumulated with a difference value (Figure 9).

6. Transmission method according to one of the preceding claims,
characterized
in that the specific duration for forming the arithmetic average value is a row or frame duration or an integral multiple thereof.

7. Transmission method according to one of the preceding claims,
characterized
in that, in an input circuit (11, 34), a write clock signal (ST) is generated from an input clock signal (T1), obtained from the STM-N signal, for at least one write address generator (16, 35) comprising a write counter, and in that write clock pulses are formed only given the presence of data of the container assigned to the write address generator.

8. Transmission method according to one of the preceding claims,
characterized
in that, in the output circuit (19, 45), a read clock signal (LT) is generated from an output clock signal (T2), generated by an oscillator, for at least one read address generator (18, 44) comprising a read counter, and in that read clock pulses are formed only given the presence of data of the assigned container that are provided for read-out from the buffer memory assigned to the read address generator.

9. Transmission method according to Claim 8,
characterized
in that, in the output circuit (19, 45), a read clock signal (LT) is generated given the presence of a negative justification signal, the generation of the read clock signal being interrupted given the presence of a positive justification signal.

10. Transmission system for the synchronous digital hierarchy, having an adaptation circuit for the compensation of phase jitter of an STM-N signal, which circuit contains, for the insertion of justification locations for at least one container of the STM-N signal, a buffer memory (17, 33) for writing in data of the container and for reading out data of the container,
characterized
in that the adaptation circuit (8) contains
- a write address generator (16, 35) for forming write addresses for the data to be written in, and a read address generator for forming read addresses for the data to be read out,
- a justification decision circuit (24, 43) for the arithmetic averaging of the differences between the addresses of the read address and write address generators over a specific duration, and for forming a justification signal which is a function of the average value, and
- an output circuit (19, 45) for forming negative or positive justification locations in the container as a function of the justification signal, and for forming an output signal from the data stored in at least one buffer memory.

## Revendications

1. Procédé de transmission pour la hiérarchie numérique synchrone, dans lequel, dans un circuit d'adaptation (8), des fluctuations de phases d'un signal STM-N sont compensées, en vue de l'insertion de points de bourrage pour au moins un conteneur du signal STM-N, sont écrites dans une mémoire-tampon (17, 33) des données du conteneur et sont lues de la mémoire-tampon (17, 33),
caractérisé
- en ce que, dans un générateur d'adresses d'écriture (16, 35), des adresses d'écriture pour les données à écrire et dans un générateur d'adresses de lecture, des adresses de lecture sont formées pour les données à lire,
- en ce que dans un circuit de décision de bourrage (24, 43), est effectuée, pendant une durée déterminée, une formation de valeur moyenne arithmétique des différences des adresses du générateur d'adresses de lecture et d'écriture, un signal de bourrage fonction de la valeur moyenne étant formé, et
- en ce que, dans un circuit de sortie (19, 45), des endroits de bourrage négatifs ou positifs sont formés dans le conteneur en fonction du signal de bourrage et un signal de sortie à partir des données mémorisées dans au moins une mémoire-tampon.

2. Procédé de transmission selon la revendication 1, caractérisé en ce que le nombre des mémoires-tampons (17, 33), le nombre des générateurs d'adresses d'écriture et de lecture (16, 35 ; 18, 44) et le nombre des circuits de décision de bourrage (24, 43) dépend du nombre des conteneurs prévus en vue de l'insertion de points de bourrage.

3. Procédé de transmission selon la revendication 1 ou 2, caractérisé en ce que, dans le circuit de décision de bourrage (24, 43), après la formation de la différence (en 25) concernant la durée déterminée en vue de la formation de la valeur moyenne arithmétique est effectuée une accumulation (en 26) des valeurs de différence et ensuite une comparaison (en 28) de la valeur moyenne avec deux valeurs extrêmes prédéterminées, et en ce que, dans le circuit de décision de bourrage, un signal de bourrage est généré, lorsque la valeur moyenne est plus faible que la valeur extrême inférieure, et un signal de bourrage positif est généré lorsque la valeur moyenne est plus grande que la valeur extrême élevée (Figure 7).

4. Procédé de transmission selon la revendication 3, caractérisé en ce que, dans le circuit de décision de bourrage (24, 43) est effectuée, conjointement avec l'accumulation des valeurs de différence, une accumulation de valeurs d'une succession numérique périodique ou d'une succession aléatoire (Figure 8).

5. Procédé de transmission selon la revendication 3, caractérisé en ce que, dans le circuit de décision de bourrage (24, 43) est formée une valeur de différence de zéro dans le cas de la moitié de l'état de remplissage de la mémoire-tampon associée, en ce que les signaux de bourrage négatifs et positifs sont multipliés par un facteur constant (en 32), et en ce qu'au moins une valeur multipliée est accumulée avec une valeur de différence (Figure 9).

6. Procédé de transmission selon l'une quelconque des revendications précédentes, caractérisé en ce que la durée déterminée, en vue de la formation de la valeur moyenne arithmétique s'élève à une durée de ligne ou de trame ou à un multiple entier de celle-ci.

7. Procédé de transmission selon l'une quelconque des revendications précédentes, caractérisé en ce que, dans un circuit d'entrée (11, 34), est généré un signal d'horloge d'écriture (ST) à partir d'un signal d'horloge d'entrée (T1) obtenu du signal STM-N pour au moins un générateur d'adresses d'écriture (16, 35) se composant d'un compteur d'écriture, et en ce que des impulsions d'horloge d'écriture sont formées uniquement dans le cas de données adjacentes du conteneur associé au générateur d'adresses d'écriture.

8. Procédé de transmission selon l'une quelconque des revendications précédentes, caractérisé en ce que, dans le circuit de sortie (19, 45) est généré un signal d'horloge de lecture (LT) à partir d'un signal d'horloge de sortie (T2) généré par un oscillateur pour au moins un générateur d'adresses de lecture (18, 44), se composant d'un compteur de lecture et en ce que des impulsions d'horloge de lecture sont formées uniquement en vue de la lecture à partir des données prévues de la mémoire-tampon associée au générateur d'adresses de lecture du conteneur associé.

9. Système de transmission selon la revendication 8, caractérisé en ce que, dans le circuit de sortie (19, 45), est généré un signal d'horloge de lecture (LT) dans le cas d'un signal de bourrage négatif, la génération du signal d'horloge de lecture étant interrompue dans le cas d'un signal de bourrage positif.

10. Système de transmission pour la hiérarchie numérique synchrone équipé d'un circuit d'adaptation en vue de la compensation de fluctuations de phases d'un signal STM-N, qui contient, en vue de l'insertion de points de bourrage pour au moins un conteneur du signal STM-N, une mémoire-tampon (17, 33) en vue de l'écriture de données du conteneur et en vue de la lecture de données du conteneur, caractérisé en ce que le circuit d'adaptation (8) comporte
- un générateur d'adresses d'écriture (16, 35) en vue de la formation d'adresses d'écriture pour le générateur d'adresses d'écriture et pour le générateur d'adresses de lecture en vue de l'information d'adresses de lecture pour les données à lire,
- un circuit de décision de bourrage (24, 43) en vue de la formation de la valeur moyenne arithmétique des différences des adresses du générateur d'adresses de lecture et d'écriture pendant une durée déterminée et er vue de la formation d'un signal de bourrage dépendant de la valeur moyenne et
- un circuit de sortie (19, 45) en vue de la formation d'endroits de bourrage négatifs ou positifs dans le conteneur en fonction du signal de bourrage et en vue de la formation d'un signal de sortie à partir des données mémorisées dans au moins une mémoire-tampon.
